Europäisches Patentamt

European Patent Office

Office européen des brevets

(11) Publication number: **0 326 294**
A1

# EUROPEAN PATENT APPLICATION

(21) Application number: 89300551.2

(22) Date of filing: 20.01.89

(51) Int. Cl.4: **A23L 1/04 , A23L 1/325 , A23L 1/31 , A23P 1/00**

(30) Priority: 22.01.88 JP 13155/88

(43) Date of publication of application:
02.08.89 Bulletin 89/31

(84) Designated Contracting States:
AT BE CH DE ES FR GB GR IT LI LU NL SE

(71) Applicant: Takeda Chemical Industries, Ltd.
27, Doshomachi 2-chome Higashi-ku
Osaka-shi Osaka, 541(JP)

(72) Inventor: Konno, Akira
284, Oaza-Takahama Shimamoto-cho
Mishima-gun Osaka 618(JP)
Inventor: Iida, Atsu
13-23, Seimeidohri
Abeno-ku Osaka 545(JP)

(74) Representative: Lewin, John Harvey et al
ELKINGTON AND FIFE Beacon House 113
Kingsway
London WC2B 6PP(GB)

(54) Shaped foods of fish or meat and production thereof.

(57) Shaped foods are produced by mixing a curdlan with small pieces of fish or meat, shaping the mixture and heating the shaped material for binding said small pieces. The thus obtained shaped foods have superior texture and appearance.

EP 0 326 294 A1

## Shaped Foods of Fish or Meat and Production Thereof

This invention relates to shaped foods prepared by mixing a curdlan to small pieces of fish or meat, shaping the mixture and heating the shaped material.

Recently, the number of people who have meals in the so-called "one dinner and four snacks" manner is increasing. Thus, people who take meals in that manner have a dinner only once a day and, for the rest, have four snacks or light meals at pleasure depending on the extent to which they feel hungry, without sticking to any particular time and/or place as far as circumstances permit. Hand in hand with such tendency, various snack foods have come into the market. Some of them, called sheet foods or film foods, for instance, are very different in shape from the conventional snack foods.

Generally, snack foods should be characterized in that they are fashionable and can be eaten smartly at any time and at any place. Snack foods currently on the market are anyhow reflecting the endeavors made to make them have such characteristic features. As yet, however, few are satisfactory from the quality viewpoint. Thus, in the case of the conventional sheet foods, for instance, some are readily broken on the occasion of eating while others are too hard, hence difficult to eat. Moreover, such snack foods may be readily broken during carrying and this is unfavorable from the product appearance viewpoint.

Under these circumstances, the present inventors made intensive investigations in an attempt to make improvements in quality features, such as texture and appearance, of certain snack foods, namely snack foods produced by using fish or meats as raw materials and, as a result, found that shaped foods obtained by mixing a curdlan with small pieces of fish or meat for binding said small pieces have good quality features as snack foods. Further investigations based on this finding have now led to completion of the present invention.

Thus, the invention provides 1) a shaped food produced from small pieces of fish or meat by shaping and binding with a curdlan and 2) a method of producing shaped foods which comprises mixing a curdlan with small pieces of fish or meat, shaping the mixture and heating the shaped material for binding said small pieces.

The "curdlan" is a generaly name of theremogelable $\beta$-1,3-glucan-type polysaccharides, which are produced by microorganisms such as strains of the genus Alcaligenes or Agrobacterium. Thus, more specifically, the curdlan produced by Alcaligenes faecalis var. myxogenes 10C3K (Agricultural and Biological Chemistry, vol. 30, page 196 (1966)], the produced by the mutant NTK-u (IFO 13140) of Alcaligenes faecalis var. myxogenes 10C3K (Japanese Patent Publication No. 32673/1973, U.S. Patent 3,822,250) and the curdlan produced by Agrobacterium radiobacter sp. (IFO 13127) and its mutant U-19 (IFO 13126) (Japanese Patent Publication No. 32674/1973, U.S. Patent 3,822,250), for instance, are usable. When cultivated in the conventional manner, generally under aerobic conditions, using, as nutrient sources, carbon sources, nitrogen sources, inorganics and so forth, such microorganisms produce a curdlan usable in the practice of the invention. The thus-produced curdlan can be recovered from the cultures generally by appropriately utilizing such means as dissolution, filtration, neutralization, washing with water, dehydration and drying. For instance, a culture broth containing a curdlan usable in the practice of the invention is supplemented with an alkali, such as an aqueous sodium hydroxide solution, the mixture is stirred to an extent sufficient for dissolution and then subjected to such treatment as centrifugation or filter press filtration using a filter aid, the thus-obtained clear and transparent filtrate is neutralized with an acid, such as hydrochloric acid, sulfuric acid or acetic acid, and the resulting gel-like precipitate is collected by centrifugation, washed with water and spray-dried to give the curdlan as a white or off-white powder.

Generally, the fish or meat to be used in the practice of the invention is not limited to any particular species provided that it is an edible one obtainable in the form of small pieces or processed into the form of small pieces. Typical examples of the fish, meat or the like product usable in the practice of the invention are given hereinbelow. As fishery products, there may be mentioned various kinds of roe (e.g. herring roe, cod roe, shishamo smelt, salmon roe, salted salmon roe), crustaceans (e.g. crab, lobster, shrimp, sea-urchin), fish (e.g. codfish, young of sardines, bonito, smelt whiting), shellfish (e.g. abalone, short neck clam, scallop), and so forth. Examples of the meat are beef, pork, chicken, fowl, mutton, lamb and horsemeat. Although the fish or meat may be used in the raw state, it is generally used suitably in the cooked or processed form. For instance, it is used after such treatment as drying, salting, smoking or heating or in the form of a finished processed food, such as a product made with fish paste, minced meat or the like (e.g. boiled fish paste, ham, sausage), a delicacy (e.g. gourmet foods based on jellyfish, red pepper-seasoned walleye pollack roe, jerky), a product boiled in sweetened soy sauce (e.g. shellfish, shrimp, tangle, fish or beef boiled with soy sauce, sugar and ginger) or a canned food (e.g. flaked tuna).

The small pieces as so referred to herein include those naturally occurring as such, for example roe and small fish (e.g. the young of sardines}, and those resulting from processing and having dimensions of, for example, 1-30 mm (thickness) x 2-30 mm (width) x 1-100 mm (length).

In accordance with the invention, the small pieces of fish or meat are mixed with a curdlan in the presence of water, shaping the mixture as desire, and heating for binding said small pieces. The curdlan is added generally in the form of a dispersion in water, a liquid seasoning or the like. When water is present on the small piece surface in an amount sufficient to wet and moisten the curdlan, it may be added in the form of a powder. In each case, the curdlan should preferably be present in the form of an aqueous mixture containing about 1-23% by weight on the surface of small pieces of fish or meat. The curdlan is used in an amount suitably selected depending on the material to which it is added, generally in an amount of 0.1-25% by weight, preferably in an amount of 0.2-10% by weight, more preferably in an amount of 1-5% by weight, based on the final product. For this purpose, usually about 10-100 parts by weight of said aqueous dispersion of curdlan is mixed with 100 parts by weight of small pieces of fish or meat. When the addition level is lower than the above range, the product food has poor integrity of small pieces and can be readily broken. When the addition level is higher than said range, the processability is poor in most cases. By adjusting this addition level, it is possible to adjust, as desired, the hardness or consistency of the desired product as well as the ease with which the small pieces get unbound.

After admixture such that the curdlan is distributed over the small fish or meat piece surface as uniformly as possible, the mixture is shaped. In this case, any shape which seem appropriate for the final product to serve as a snack food may be selected. A thickness of the final product, however, is preferably in about 0.5 - 60mm. Thus, for instance, the shape may be card-like, sheet- or plate-like, bar- or rod-like, cylindrical triangular, cubic or spherical, but is not limited to thereto. For this shaping, it is advantageous, from the operation viewpoint, to prepare a mold having the desired shape and size and fill the above mixture into said mold. Alternatively, it is also possible to shape the mixture into an intermediate product and, after the heat treatment to be mentioned later herein, cut the intermediate product to a desired shape and size. For instance, the method comprising shaping the mixture once into broad plates, heating the plates for binding said small pieces and then cutting the plates to a desired size and shape may be employed.

The shapings are then heated for binding said small pieces. This heating may be made by an appropriate method, such as direct heating, water bath heating, oil bath heating or heating under pressure, in a manner such that the shapings can be heated to a temperature above about 55°C, preferably above 70°C, more preferably above 80°C, whereby the binding of said small pieces proceeds by the intermediary of the curdlan. The heating time should suitably be selected depending on the size of the shapings. Usually, the preferably heating time is about 0.5 - 30 minutes. In this way, the small pieces are bound together by the binding action of a curdlan to give the shaped food according to the invention with a certain given shape and size.

The shaped food according to the invention may serve as a snack food either as such or in combination with one or more other food materials. For instance, the shapings obtained by shaping and binding into plates may serve as a kind of snack food for easy eating or may be used in preparing sandwich by inserting said plate-like shaping between two slices of bread, for instance.

The shaped food according to the invention is characterized in that it has a certain desired shape and size with small pieces of fish or meat being bound together by means of a curdlan. Since the binding among said small pieces is proper and adequate, the shaped food is not deformed or broken when conveyed or when taken up by the hand for eating. Furthermore, it retains the taste and flavor of fish or meat satisfactorily and can be suited as a snack food or a material therefor. Such particular effects can be produced by the use of a curdlan; such effects can never be produced by the use of other polysaccharides, for example starch.

The following examples illustrate the invention in further detail. A spray-dried powder of the curdlan produced by the mutant NTK-u (IFO 14140) of Alcaligenes faecalis var. myxogenes 10C3K was used in each Example.

Example 1

A dispersion of 5 g of the curdlan in 50 ml of water was added to 100 g of red pepper-seasoned walleye pollack roe (water content: 50% w/w), and the mixture was stirred until it became uniformly moistened. The mixture was then dropped onto between two hot rolls (clearance: 1 mm) having a surface temperature of 150°C and thus shaped into a film with heating. There was obtained a sheet-like red pepper-seasoned walleye pollack roe shaping (water content: 40% w/w).

Minced fish (surimi) for boiled fish paste as prepared in the conventional manner was rolled in the above sheet-like red pepper-seasoned walleye pollack roe shaping and the whole was steamed in a steamer to give a piece of boiled fish paste which was delicious and dainty.

Example 2

A uniform mixture containing 260 g of beef cut into cubes each side of which was about 5 mm, 6 g of table salt, 3.5 g of caramel, 0.7 ml of annatto, 72 g of water, 8 g of beef extract, 8 g of sugar, 1 g of pepper, 1 g of onion powder, 1.7 g of sodium glutamate, 0.1 g of a nucleotide seasoning (Ribotide, manufactured by Takeda Chemical Industries) and 15 g of the curdlan was prepared. This mixture was wrapped up in an edible film produced from the curdlan (Japanese Patent Publication No. 45521/1986) and shaped into a plate (about 1 cm in thickness). The plate was heated in a steamer (80°C) for 20 minutes and then dried at 60°C for 4 hours to give a beef jerky plate. This beef jerky had a good texture with beef pieces bound together properly

Example 3

A uniform moist mixture was prepared by blending 100 g of shishamo smelt roe, 5 g of the curdlan and 30 ml of water. This mixture was spread on a glass plate to a uniform thickness (about 1 mm) and heated in a steamer (80°C) for about 1 minute, whereby shishamo smelt eggs were bound together and a wholly sheet-like shaping was obtained. Strips, 1 cm in width, cut from this sheet can be used as strings for kobumaki- (rolled tang with dried fish in it).

Example 4

The curdlan (2.5 g) was added to 100 g of flaked tuna (water content: 64%) and mined uniformly. The mixture (85g) was shaped by filling it in a heat-resistant plastic mold (130 mm x 110 mm x 5 mm). The shaped material was heated in a steamer (80°C) for 10 minutes and then took out from the mold to give a shaped tuna product. This had a good texture with tuna flakes bound together properly.

## Claims

1. A shaped food, which comprises shaping and binding small pieces of fish or meat with a curdlan.

2. The shaped food according to claim 1, wherein the small pieces have dimensions of 1 to 30 mm in a thickness, 2 to 30 mm in a width and 1 to 100 mm in a length.

3. The shaped food according to claim 1, wherein the curdlan is contained in an amount of 1 to 5% by weight, based on the final product.

4. A method of producing shaped foods, which comprises mixing a curdlan with small pieces of fish or meat, shaping the mixture and heating the shaped material for binding said small pieces.

5. The method according to claim 4, wherein the curdlan is mixed in an amount of 1 to 5% by weight, based on the final product.

6. The method according to claim 4, wherein the curdlan is present in the form of an aqueous mixture containing about 1 to 23% by weight on the surface of said small pieces.

7. The method according to claim 4, wherein the mixture is shaped into a size having a thickness of about 0.5 to 60 mm.

8. The method according to claim 4, wherein the shaped material is heated above about 55°C.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | US-A-3 822 250 (H. KIMURA et al.) * column 11, lines 1-36, column 15, example B-6 * | 1,2 | A 23 L 1/04 A 23 L 1/325 A 23 L 1/31 A 23 P 1/00 |
| X | US-A-3 754 925 (H. KIMURA et al.) * abstract, column 11, lines 39-50 * | 1 | |
| X | DE-A-3 248 692 (Y. SMADAR) * claims 1-7,18,22 * | 1,3 | |
| A | EP-A-0 132 363 (KABUSHIKI KAISHA KIBUN) * claim 1 * | 1 | |
| A | GB-A-1 293 449 (SWIFT & CO) * claims 1-10 * | 1,3 | |

TECHNICAL FIELDS SEARCHED (Int. Cl.4)

A 23 L 1/00
A 23 P 1/00

The present search report has been drawn up for all claims

| Place of search | Date of completion of the search | Examiner |
|---|---|---|
| BERLIN | 23-04-1989 | SCHULTZE D |